# EUROPÄISCHE PATENTSCHRIFT

(11) **EP 1 186 484 B1**
(45) Veröffentlichungstag und Bekanntmachung des Hinweises auf die Patenterteilung: **07.04.2004**
(21) Anmeldenummer: 01250405.6
(22) Anmeldetag: 21.01.2000
(51) Int. Cl.: B60R 21/16

(54) **Gassack für ein Airbagmodul**
Gas bag for an airbag module
Coussin gonflable pour un module d'airbag

(30) Priorität: 28.01.1999 DE 19905025
(43) Veröffentlichungstag der Anmeldung: 13.03.2002
(62) Teilanmeldung aus: 00910501.6
(73) Patentinhaber: TAKATA - PETRI Aktiengesellschaft, 63743 Aschaffenburg (DE)
(72) Erfinder: Adomeit, Heinz-Dieter, 10623 Berlin (DE); Haase, Carsten, 13187 Berlin (DE)
(74) Vertreter: Baumgärtel, Gunnar, Dr.

(56) Entgegenhaltungen:
- DE-A- 19 505 507
- DE-A- 19 752 629
- DE-U- 29 521 369
- US-A- 5 642 900

## Beschreibung

Die Erfindung betrifft einen Gassack für ein Airbagmodul nach dem Oberbegriff des Anspruchs 1.

Airbagmodule dienen dem Schutz von Kraftfahrzeuginsassen im Crashfall, indem ein Gassack innerhalb kurzer Zeit zwischen einem Kraftfahrzeugteil, wie Lenkrad, Armaturenbrett oder Seitentür, und dem Insassen durch das von einem Gasgenerator erzeugte oder freigesetzte Gas aufgeblasen wird.

Üblicherweise umfaßt ein Airbagmodul neben dem Gassack und dem Gasgenerator eine Anzahl weiterer Bauteile, insbesondere ein Gehäuse, in das der Gassack gefaltet wird, eine Abdeckung für das Gehäuse und einen Generatorträger, auf dem der Gasgenerator befestigt ist. Die Befestigung des Gassackes erfordert in der Regel noch zusätzliche Bauteile, wie z.B. einen Haltering.

DE 295 21 369 U1 offenbart einen Gassack nach dem Oberbegriff des Anspruchs 1.

So ist aus der US-PS 5,797,622 ein Lenkrad bekannt, an dem ein zweiteiliges Gehäuse für ein Airbagmodul angeordnet ist, das ein einstückig an dem Lenkrad angeformtes Gehäuseunterteil und ein als Abdeckung dienendes Gehäuseoberteil umfaßt, wobei an dem Gehäuseoberteil eine hohlzylindrische Halterung befestigt ist, in der ein zylindrisch ausgebildete Gasgenerator gelagert ist und auf deren äußere Oberfläche der gefaltete Gassack gelegt ist.

Aus der EP 0 622 276 A1 ist eine Gassack-Rückhaltesystem für Fahrzeuge bekannt, bei dem der Gassack an einer Verankerungsplatte vormontierbar befestigt und zusammen mit der Verankerungsplatte in den Innenraum einer Abdeckung des Rückhaltesystems eingelegt ist. Der Abdeckung ist als Unterteil ein Generatorträger in Form einer Tragplatte zugeordnet, auf der ein Gasgenerator angebracht ist.

Zur Einsparung von Kosten und vor allem zur Vereinfachung der Montage des Airbagmoduls und seiner Befestigung an einem Teil des Kraftfahrzeuges wurde bereits vorgeschlagen, die Anzahl der Einzelteile eines Airbagmoduls zu reduzieren.

In der EP 0 832 791 A2 ist ein Gassack-Modul für ein Fahrzeuginsassen-Rückhaltesystem mit einem Gassack, einem Gasgenerator und Montageschrauben beschrieben, bei dem die Montageschrauben einen von dem Gassack-Modul wegragenden Befestigungsfortsatz zur Befestigung des Gassack-Moduls an einem Fahrzeugteil aufweisen. In einer Ausführungsform sind die Schrauben mit einem Anlagekopf versehen, wobei zwischen dem Anlagekopf und einer auf den Schaft der Montageschraube aufgeschraubten Mutter die Berandung der Einblasöffnung des Gassackes eingespannt ist. Ferner sind ein Haltering im Inneren des Gassackes und eine Montageplatte für den Gasgenerator vorgesehen, zwischen denen die Berandung aufgenommen ist. Als Gehäuse dient bei diesem Modul eine Abdeckung, die entsprechend gestaltete Seitenwände und Befestigungsmittel für Schrauben aufweist.

Damit wird zwar eine Reduzierung der Teilezahl erreicht; zur sicheren Befestigung des Gassackes an dem Gasgenerator sind aber auch bei diesem Airbagmodul neben der als Gehäuse ausgebildeten Abdeckung weitere Gehäuseteile, nämlich eine Montageplatte an dem Gasgenerator und ein Haltering erforderlich.

Aus der US-PS 5,642,900 ist ein Gassack für ein Airbagmodul bekannt, der eine schlitzförmige Öffnung zum Einführen eines Gasgenerators aufweist, durch die mehrere Felder in dem Gassack gebildet werden, in denen jeweils Öffnungen vorgesehen sind, in welche von dem Gasgenerator abstehende Befestigungsbolzen einfädelbar sind.

Der vorliegenden Erfindung liegt die Aufgabe zugrunde, einen Gassack für ein Airbagmodul bereitzustellen, der einfach an einem Gasgenerator befestigbar ist.

Diese Aufgabe wird durch einen Gassack mit den Merkmalen des Anspruchs 1 gelöst.

Bei einem Gassack für ein Airbagmodul, der eine schlitzförmige Öffnung zum Einführen eines Gasgenerators aufweist, durch die mindestens zwei Felder in dem Gassack gebildet werden, sind danach in den Feldern Durchgänge vorgesehen, die derart über von dem Gasgenerator abstehende Befestigungsmittel einfädelbar sind, daß die Felder teilweise überlappen.

Vorzugsweise bildet die schlitzförmige Öffnung eine gerade Anzahl Felder. Insbesondere ist eine kreuzschlitzförmige Öffnung vorgesehen, so daß vier Felder gebildet werden. Die Öffnung kann aber auch als sternförmiger Schlitz ausgebildet sein.

Zur Montage des Airbagmoduls wird der Gasgenerator in diesem Fall in den Gassack eingebracht, und anschließend werden zu seiner Festlegung an dem Gasgenerator zunächst zwei erste benachbarte Durchgänge über die Gewindebolzen gefädelt und danach die beiden verbleibenden Durchgänge. Die von dem Schlitz gebildeten Felder überlappen sich dadurch und es wird eine Aussparung für den Anschluß eines Sensors geschaffen. Auf diese Weise wird eine besonders dichte und sichere Klemmung des Gassackes an dem Gasgenerator erreicht.

Die Befestigung des Airbagmoduls an einem Lenkrad erfolgt zweckmäßigerweise über die an einem Flansch des Gasgenerators vorgesehenen Befestigungsmittel. Die Verwendung von Gewindebolzen erlaubt dabei eine sehr leichte Anpassung an verschiedene Lenkradtypen. Zur Montage des Airbagmoduls sind lediglich entsprechende Bohrungen in dem Lenkradskelett oder in anderen zur Aufnahme des Airbagmoduls im Lenkrad vorgesehenen Teile (z. B. in der Kontaktbrücke beim "floating horn") vorzusehen.

Der erfindungsgemäße Gassack ist vorteilhaft bei einem Airbagmodul verwendbar, bei dem der Generatorträger klappbar an dem Gehäuse angelenkt ist, beispielsweise über ein Scharnier. Hierbei wird der Generatorträger beispielsweise von mindestens einer klappbaren Lasche gebildet, die ein Öffnen und Schließen des Gehäuses ermöglicht. Insbesondere sind zwei, drei oder vier Laschen vorgesehen. Insbesondere liegt der Gasgenerator zumindest teilweise auf der/den Lasche(n) auf.

Es ist zweckmäßig, daß das Gehäuse des Airbagmodules aus Kunststoff besteht, wobei als Scharnier ein Filmscharnier vorgesehen ist. Die Herstellung kann dabei vorteilhaft im Spritzgußverfahren erfolgen. In einer bevorzugten Ausführungsform wird das Gehäuse in der 2- oder 3 - Komponenten Technik hergestellt, so daß die Eigenschaften der Kunststoffe in einzelnen Bereichen des Gehäuses optimal anpaßbar sind. So kann die sichtbare Oberfläche beispielsweise entsprechend der Fahrzeuginnenausstattung ein Dekor aufweisen. Im Bereich des Scharniers kann ein elastischer Kunststoff eingesetzt werden.

Insbesondere bildet mindestens eine angespritzte Lasche den Generatorträger. Je nach Geometrie des Airbagmoduls bzw. des Fahrzeugteils, in oder an den das Modul montiert wird, können auch zwei, drei oder vier Laschen vorteilhaft sein. So bietet sich z. B. für den Einbau eines Airbagmoduls in ein Dreispeichenlenkrad ein Gehäuse mit drei Laschen an. Es ist weiterhin möglich, daß sich bei zwei oder mehr Laschen diese gegenseitig überlappen.

Ferner sind an den Laschen und an weiteren Bereichen des Gehäuses Rastelemente vorgesehen. Die Rastelemente erlauben eine Festlegung der Laschen an dem Gehäuse (bei einer Vormontage), wodurch die Befestigung der Airbageinheit an einem Fahrzeugteil erleichtert wird.

Zweckmäßigerweise erfolgt die endgültige Festlegung der Teile der Airbageinheit zueinander gleichzeitig mit der Befestigung des Moduls an einem Fahrzeugteil. Damit erübrigen sich weitere Befestigungsteile wie etwa Nieten oder Schrauben.

Mit Vorteil weist der Gasgenerator einen Flansch zu seiner Festlegung an dem Gehäuse auf. An dem Flansch können außerdem vormontierte oder damit einteilige Befestigungsmittel vorgesehen sein, die der Befestigung des Airbagmoduls an einem Kraftfahrzeugteil dienen. Als Befestigungsmittel sind insbesondere Gewindebolzen geeignet.

Die Erfindung soll anhand der beigefügten Figuren näher erläutert werden.

Es zeigen:
- Figur 1:: einen Querschnitt durch ein Lenkrad mit einem Airbagmodul;
- Figur 2:: eine Unteransicht des Airbagmoduls aus Figur 1;
- Figur 3a:: einen Querschnitt durch eine Abwandlung des Airbagmoduls aus Figur 1 und 2;
- Figur 3b:: eine Unteransicht des Airbagmoduls aus Figur 3a;
- Figur 4a:: einen Querschnitt durch ein Airbagmodul für ein Vierspeichenlenkrad;
- Figur 4b:: eine Unteransicht des Airbagmoduls aus Figur 4a;
- Figur 5a:: einen Querschnitt durch ein weiteres Airbagmodul für ein Vierspeichenlenkrad;
- Figur 5b:: eine Unteransicht des Airbagmoduls aus Figur 5a;
- Figur 6:: eine Unteransicht eines Airbagmoduls für ein Dreispeichenlenkrad;
- Figur 7:: eine Unteransicht eines drei Laschen aufweisenden Airbagmoduls für ein Dreispeichenlenkrad;
- Figur 8:: eine Unteransicht eines zwei überlappende Laschen aufweisenden Airbagmoduls;
- Figur 9:: einen Gassack für ein Airbagmodul mit einer schlitzförmigen Öffnung, wobei in den Gassack ein Gasgenerator eingeführt ist;
- Figur 10a:: einen erfindungsgemäßen Gassack mit einer kreuzschlitzförmigen Öffnung, durch die vier Felder in dem Gassack gebildet werden, wobei in den Gassack ein Gasgenerator eingeführt ist;
- Figur 10b:: den Gassack aus Figur 10a, bei dem die ersten beiden Felder über Gewindebolzen eingefädelt sind;
- Figur 10c:: den Gassack aus den Figuren 10a und 10b, bei dem die weiteren beiden Felder ebenfalls über die Gewindebolzen eingefädelt sind.

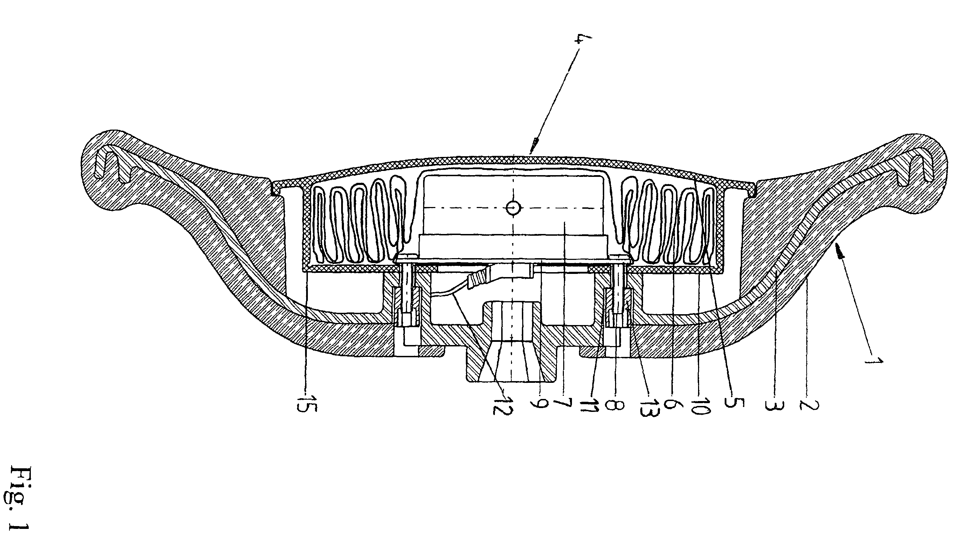

In Figur 1 ist ein Lenkrad 1 mit einem Lenkradkranz 2 und einer Lenkradnabe 3 gezeigt, in das ein Airbagmodul 4 integriert ist. Das Airbagmodul 4 umfaßt eine Abdeckung 5, einen Gassack 6 und einen Gasgenerator 7. Die einteilige (d.h. einstückig geformte) Abdeckung 5 bildet sowohl das Gehäuse des Airbagmoduls als auch einen Generatorträger für den Gasgenerator 7 und umschließt sowohl den Gassack 6 als auch den Gasgenerator 7.

An dem Gasgenerator 7 ist ein Flansch 9 mit Befestigungsmitteln 8 vorgesehen. Als Befestigungsmittel 8 dienen Gewindebolzen, mittels derer einerseits der Gasgenerator 7 an dem Generatorträger 10 als Teil des Gehäuses, d. h. der Abdeckung 5, festgelegt ist und andererseits das Airbagmodul 4 an der Lenkradnabe 3 montiert ist. Dazu sind in der Lenkradnabe 3 Bohrungen 11 vorgesehen, in die die Gewindebolzen 8 eingreifen und in denen sie durch Muttern 13 gehalten werden.

Weiterhin ist ein Zündkabel 12 erkennbar, über den der Gasgenerator 7 der Airbageinheit 4 gezündet wird. Das Zündkabel 12 ist über einen Anschlußstecker an den Gasgenerator 7 angeschlossen.

Sowohl die Montage der Airbageinheit 4 selbst als auch deren Befestigung an dem Lenkrad 1 sind durch die einteilige Ausbildung ihres Gehäuses (einschließlich Abdeckung und Generatorträger) und die dadurch erreichte Reduzierung der Teileanzahl erheblich vereinfacht. So besteht das Airbagmodul 4 nur aus den drei Teilen Abdeckung 5, Gassack 6 und Gasgenerator 7. Der Flansch 9 und die Befestigungsmittel (Gewindebolzen 8) sind bevorzugt einstückig mit dem Gasgenerator 7 ausgeführt oder zumindest an diesem vormontiert. Das Modul 4 kann damit sehr einfach vorgefertigt werden.

Die Montage der Airbageinheit 4 erfolgt sehr einfach, indem der Gassack 6 über den Gasgenerator 7 gestülpt und an diesem festgelegt wird, der Gassack 6 in an sich bekannter Weise in das von der Abdeckung 5 gebildete Gehäuse gefaltet wird und der untere Bereich 10 der Abdeckung 5 als Generatorträger auf den Gasgenerator 7 geklappt wird.

Zur Befestigung an dem Lenkrad 1 werden die Gewindebolzen 8 in die Bohrungen 11 gesteckt und mit den Muttern 13 verschraubt. Das Zündkabel 12 weist in der Regel einen Stecker auf und wird über diesen an das Airbagmodul 4 angeschlossen.

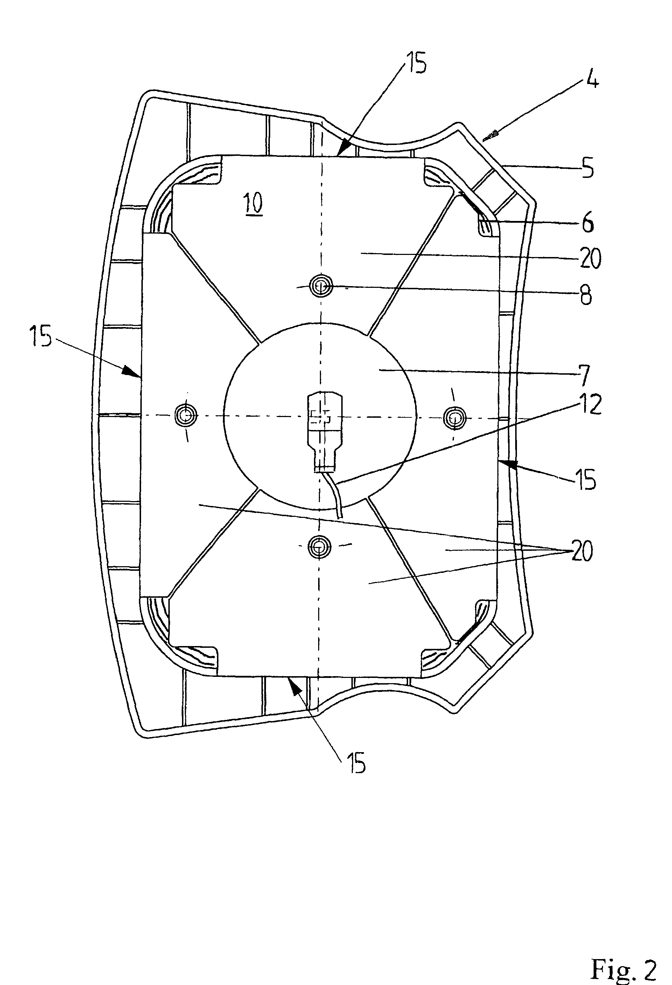

In der Figur 2 ist das Airbagmodul aus Figur 1 in einer Unteransicht dargestellt. Man erkennt, daß der den Generatorträger 10 bildende untere Bereich der Abdeckung 5 aus vier Laschen 20 besteht, die über Scharniere 15 klappbar an der Abdeckung 5 angelenkt sind. Weiterhin sind vier Gewindebolzen als Befestigungsmittel 8 erkennbar, die durch entsprechende Ausnehmungen in dem Generatorträger 10 ragen, sowie eine Aussparung 18 für das Zündkabel 12. Die Form der Abdeckung 5 ist an die Montage in ein Vierspeichenlenkrad angepaßt.

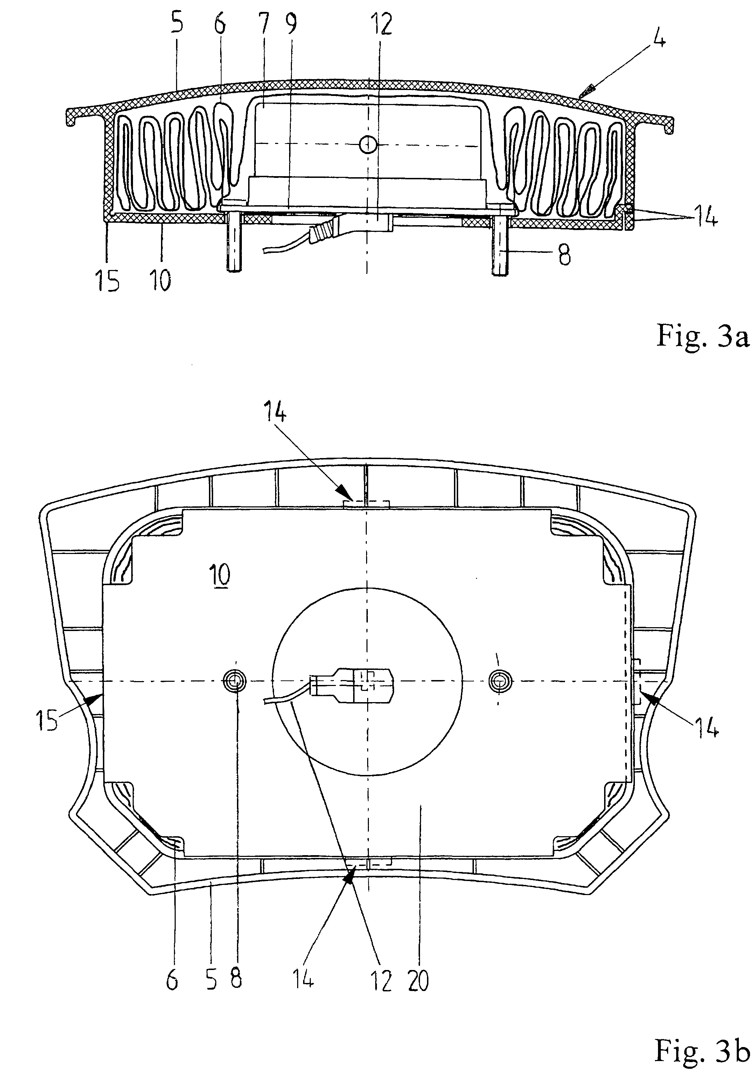

Die Figur 3a zeigt ein Airbagmodul 4 im Querschnitt. Der Aufbau entspricht im wesentlichen demjenigen in Figur 1, wobei der den Generatorträger 10 bildende untere Bereich der Abdeckung 5 auf der einen Seite über ein Filmscharnier 15 angelenkt ist und auf der anderen Seite über Rastelemente 14 gesichert wird. Die endgültige Festlegung des Gasgenerators 7 an dem Gehäuse 5 erfolgt bei der Montage des Airbagmoduls 4 an einem (hier nicht dargestellten) Lenkrad.

In der Figur 3b ist das Airbagmodul 4 aus Figur 3a von unten gezeigt. Man erkennt, daß die Form der Abdeckung 5 zur Verwendung in einem Lenkrad angepaßt ist. Weiterhin ist der den Generatorträger 10 bildende untere Bereich der Abdeckung 5 erkennbar, der über das Filmscharnier 15 mit dieser verbunden ist.

Nachdem der Gassack 6 in die Abdeckung 5 gefaltet worden ist, wird der untere Bereich auf den Gasgenerator 7 (in Fig. 3b verdeckt) umgelegt und mit den Rastelementen 14 gesichert. Die als Gewindebolzen ausgebildeten Befestigungsmittel 8 ragen durch entsprechende Öffnungen in dem Generatorträger 10. Ebenso ist eine Ausnehmung für das Zündkabel 12 vorgesehen.

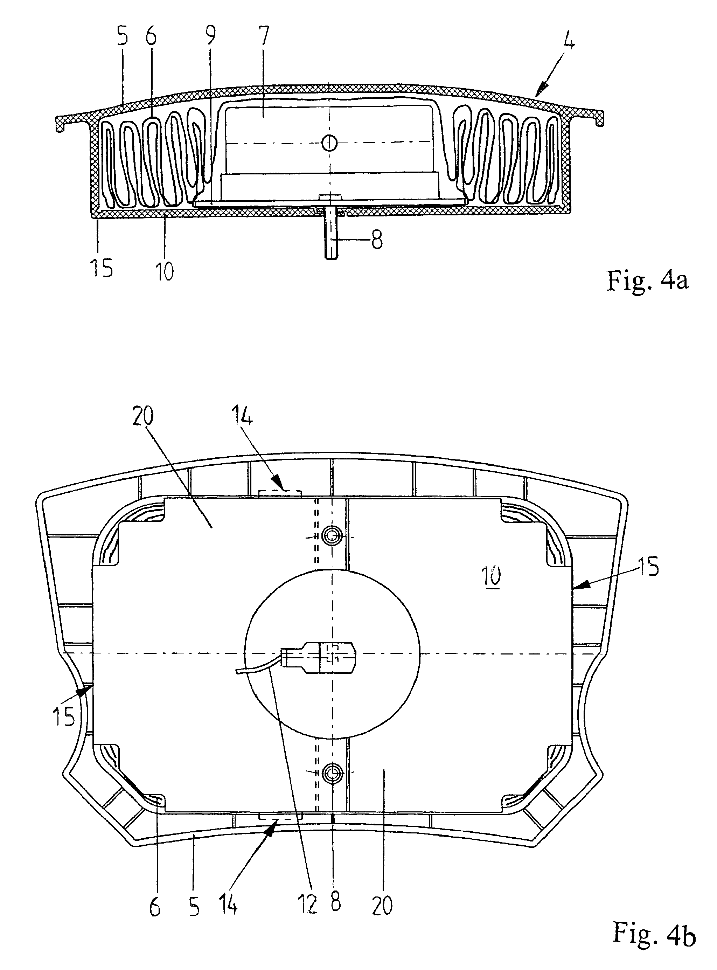

In den Figuren 4a und 4b ist ein Airbagmoduls 4 im Längsschnitt und in einer Unteransicht dargestellt. Hier wird den Generatorträger 10 bildende untere Bereich der Abdeckung 5 von zwei sich überlappenden Laschen 20 gebildet. Durch die Überlappung wird eine besonders sichere und dichte Festlegung des Gassackes 6 zwischen dem Gasgenerator 7 und dem unteren Bereich der Abdeckung 5 erreicht.

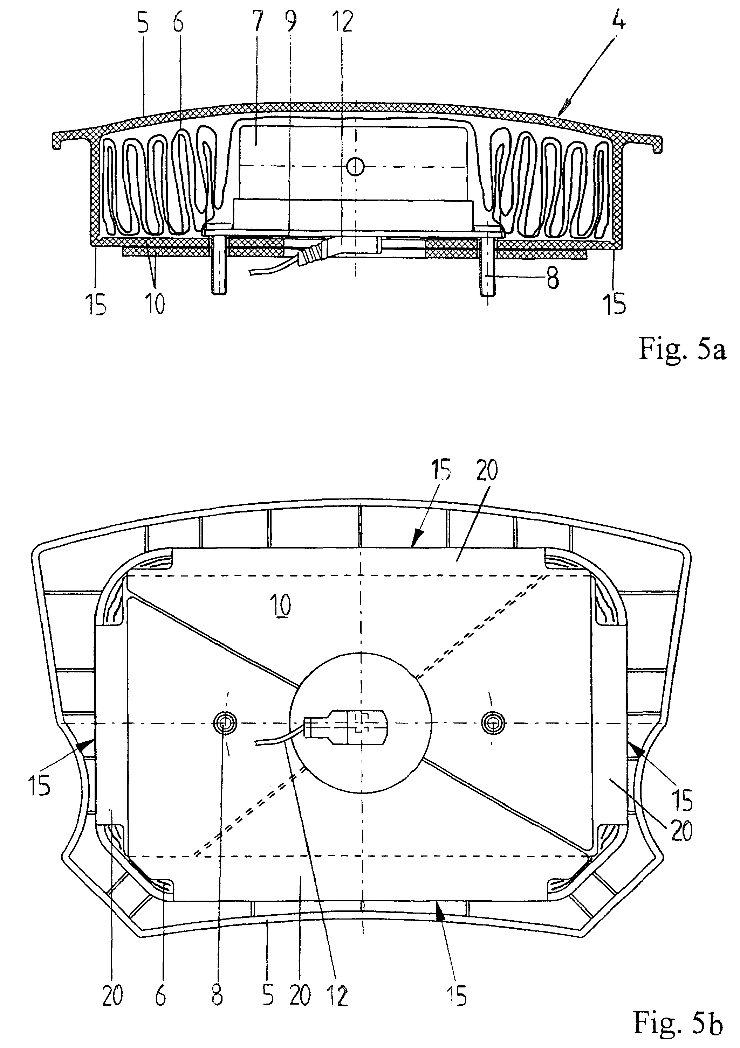

Die Figuren 5a und 5b zeigen ein als Generatorträger 10 dienenden unteren Bereichs der Abdeckung 5 bei einem Airbagmodul 4. In dieser Ausführungsform bilden vier vollständig überlappende, klappbare Laschen 20 den unteren Bereich, so daß eine Sicherung durch Rastelemente verzichtbar ist.

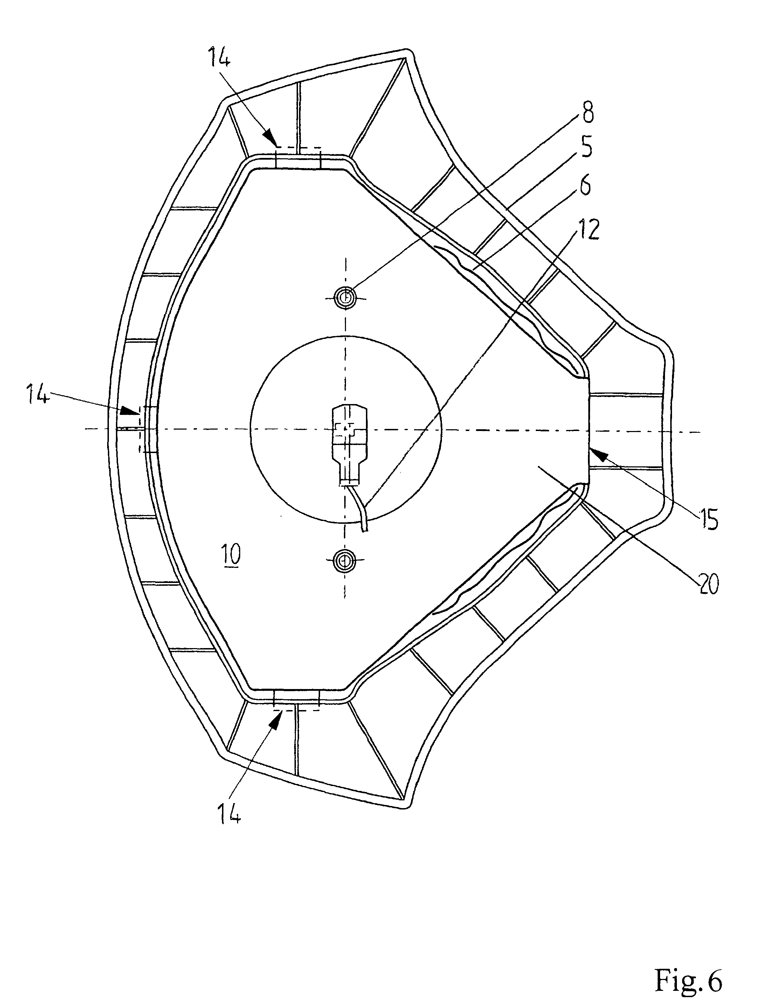

In Figur 6 ist ein Airbagmodul für ein Dreispeichenlenkrad in einer Unteransicht gezeigt. Der den Generatorträger 10 bildende untere Bereich der Abdeckung 5 ist in dieser Ausführungsform einteilig gestaltet, mittels eines Scharnieres 15 verschwenkbar und wird mit Rastelementen 14 gesichert.

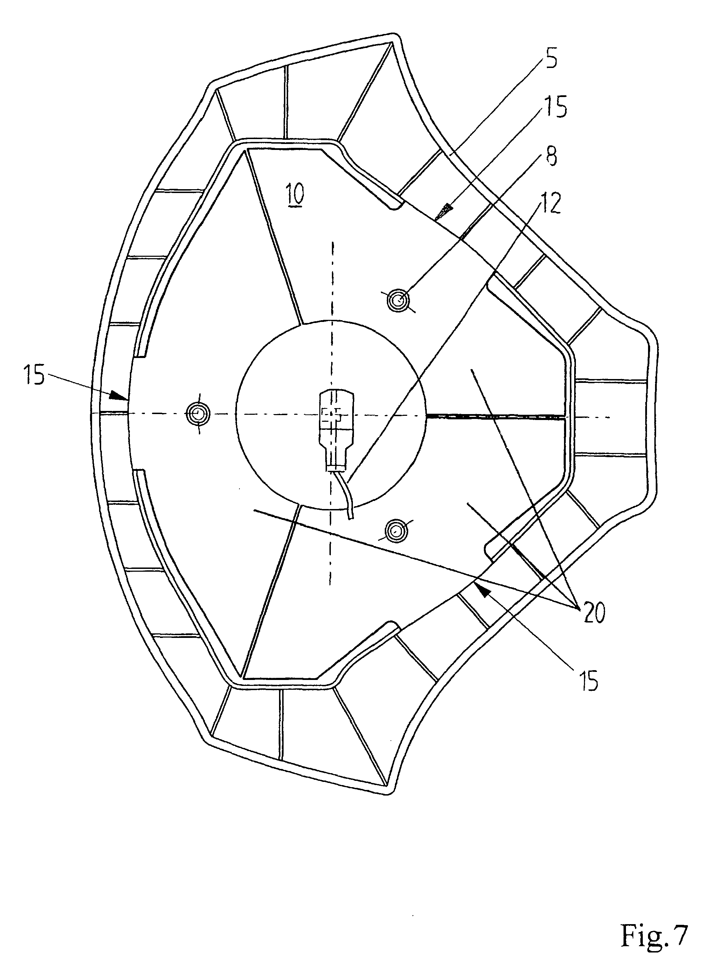

Figur 7 zeigt eine Unteransicht eines Airbagmoduls für ein Dreispeichenlenkrad. Der untere Bereich 10 der Abdeckung wird von drei Laschen 20 gebildet, und es sind entsprechend drei Gewindebolzen 8 als Befestigungsmittel 8 vorgesehen.

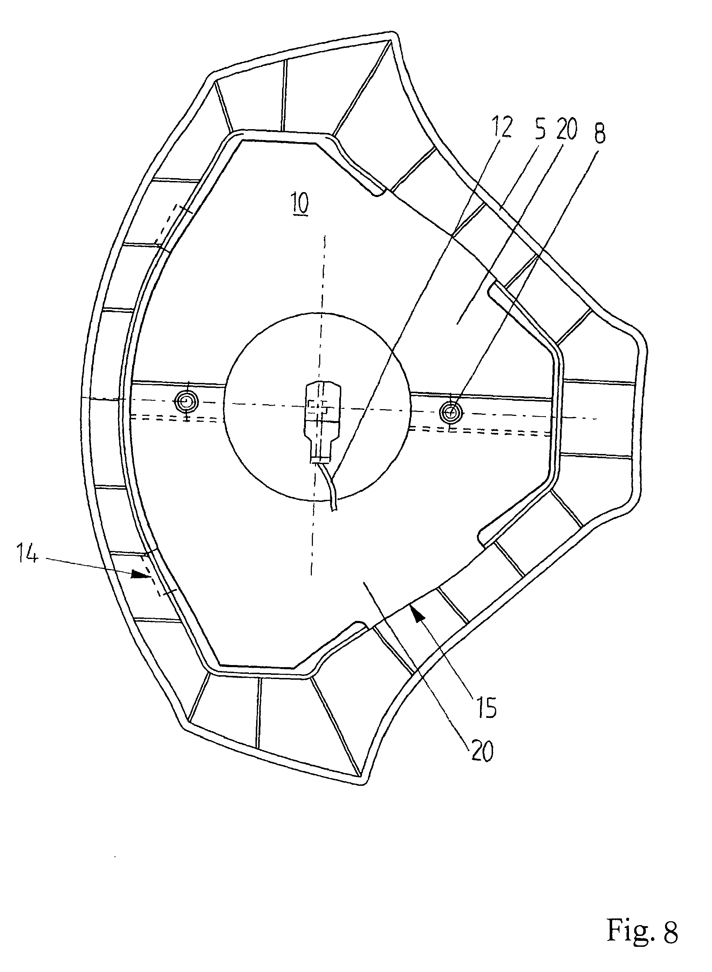

Figur 8 zeigt schließlich eine Ausführungsform eines Airbagmoduls für ein Dreispeichenlenkrad, bei der der Generatorträger 10 von zwei sich überlappenden Laschen 20 gebildet wird. Jede der Laschen 20 ist einstückig mit der Abdeckung 5 ausgebildet und über ein Scharnier 15 an dieser angelenkt. Ferner werden beide Laschen 20 zur Sicherung mittels Rastelementen 14 an der Abdeckung 5 verrastet.

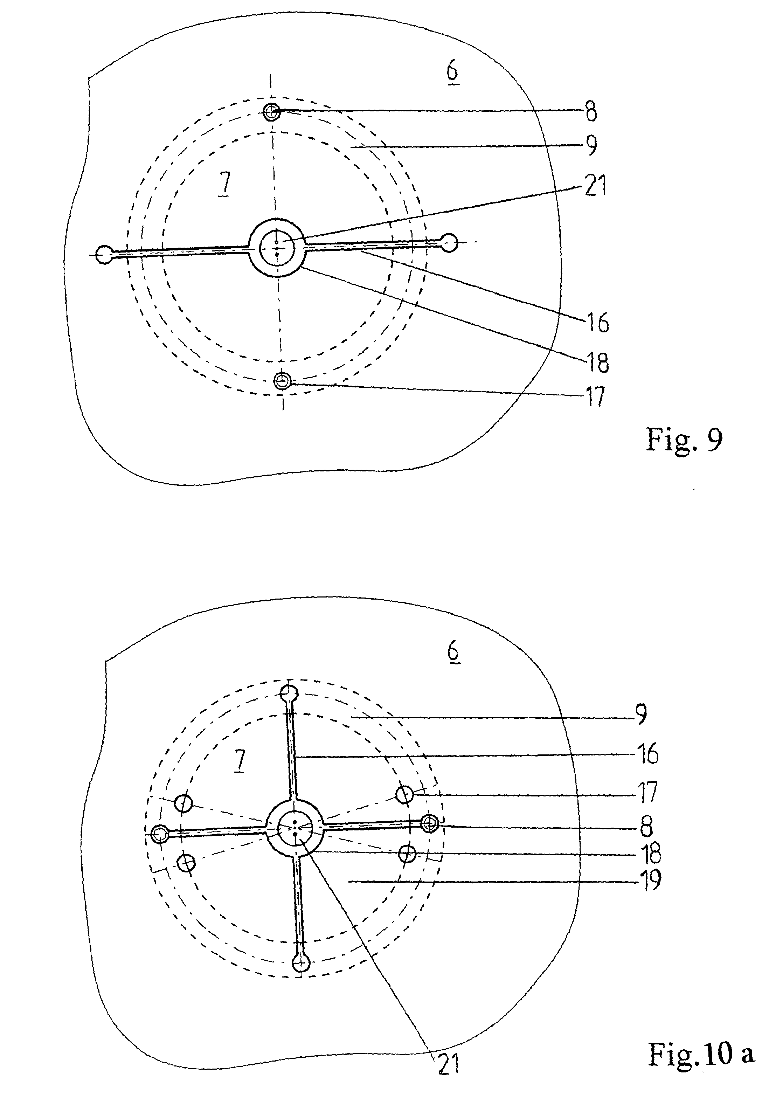

In Figur 9 ist ein Teil eines noch nicht gefalteten Gassackes 6 dargestellt, in den ein Gasgenerator 7 eingeführt ist. Der Gassack 6 weist einen Schlitz 16 zum Einführen des Gasgenerators 7 und Durchgänge 17 zum Einfädeln auf die Gewindebolzen 8 des Flansches 9 des Gasgenerators 7 auf. Die Durchgänge 17 haben vorzugsweise einen verstärkten Rand. Weiterhin ist eine Aussparung 18 zum Anschließen des Zündkabels 12 an den Anschluß 21 vorgesehen.

Die Figur 10a zeigt eine bevorzugte Ausführungsform des Gassackes 6. Es sind wiederum nur ein Teil des Gassackes 6 sowie der Gasgenerator 7 dargestellt. Der Gassack 6 weist einen kreuzförmigen Schlitz 16 zur Einführung des Gasgenerators 7 auf. Außerdem ist in jedem von dem Schlitz 16 gebildeten Feld 19 ein Durchgang 17 vorgesehen, in den ein Gewindebolzen 8 eingefädelt wird.

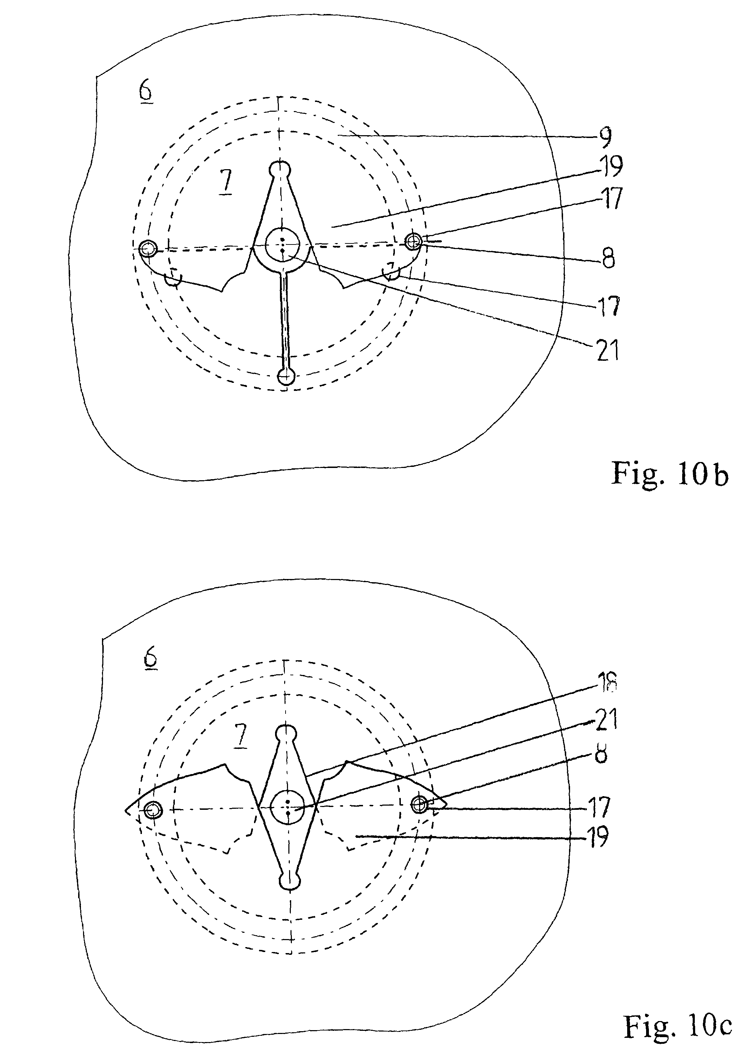

Wie in Figur 10b gezeigt werden nach dem Einführen des Gasgenerators 7 in den Gassack 6 zunächst zwei benachbarte Durchgänge 17 über jeweils einen Gewindebolzen 8 gefädelt, so daß das Gewebe das Gassackes 6 über die Lage des ursprünglichen Schlitzes 16 hinausragt. Anschließend werden die beiden anderen Durchgänge 17 wie in Figur 10c gezeigt ebenfalls über die Gewindebolzen 8 gefädelt. Damit wird einerseits der Gassack 6 an dem Gasgenerator 7 festgelegt und durch die Überlappung der Felder gedichtet und andererseits eine entsprechende Aussparung 18 für den Anschluß 21 des zündkabels 12 geschaffen.

Dieses Anbindungsverfahren eignet sich ganz allgemein zur Anbindung von Gassäcken an Gasgeneratoren. Es handelt sich um ein besonders einfaches und zugleich sicheres Verfahren, bei dem keine Halteringe oder andere Befestigungsvorrichtungen erforderlich sind. Einzige Voraussetzung sind entsprechende Gewindebolzen, Schrauben oder sonstige Stifte an dem Gasgenerator, über die die Öffnungen im Bereich des Schlitzes für den Gasgenerator gefädelt werden können.

### Bezugszeichenliste

1. Lenkrad
2. Lenkradkranz
3. Lenkradnabe
4. Airbagmodul
5. Abdeckung
6. Gassack
7. Gasgenerator
8. Befestigungsmittel
9. Flansch
10. Generatorträger
11. Bohrungen
12. Zündkabel
13. Mutter
14. Rastelemente
15. Scharnier
16. Öffnung
17. Durchgang
18. Aussparung
19. Feld
20. Lasche
21. Anschluß für das Zündkabel

## Patentansprüche

1. Gassack für ein Airbagmodul, mit Mitteln zur Anbindung des Gassackes an einen Gasgenerator, wobei der Gassack (6) eine schlitzförmige Öffnung (16) zum Einführen des Gasgenerators (7) aufweist, durch die mindestens zwei Felder (19) in dem Gassack (6) gebildet werden, und wobei in den Feldern (19) Durchgänge (17) vorgesehen sind, in die von dem Gasgenerator (7) abstehende Befestigungsmittel (8) einfädelbar sind,
daß der Gasgenerator (7) durch die schlitzförmige Öffnung (16) vollständig in den Gassack (6) einführbar ist **dadurch gekennzeichnet, daß** die Durchgänge (17) derart über von dem eingeführten Gasgenerator (7) abstehende Befestigungsmittel (8) einfädelbar sind, daß die Felder (19) teilweise überlappen.

2. Gassack nach Anspruch 1, **dadurch gekennzeichnet, daß** die Felder (19) in dem Gassack (6) durch das Überlappen eine Aussparung (18) für einen Anschluß (21) eines Zündkabels (12) freigeben.

3. Gassack nach Anspruch 1 oder 2, **dadurch gekennzeichnet, daß** die schlitzförmige Öffnung (16) eine gerade Anzahl Felder (19) bildet.

4. Gassack nach einem der vorhergehenden Ansprüche, **dadurch gekennzeichnet, daß** die Durchgänge (17) gestanzte Löcher sind.

5. Gassack nach einem der vorhergehenden Ansprüche, **dadurch gekennzeichnet, daß** die Durchgänge (17) einen verstärkten Rand aufweisen.

6. Gassack nach einem der vorhergehenden Ansprüche, **dadurch gekennzeichnet, daß** zwei Befestigungsmittel (8) vorgesehen sind und die Öffnung (16) kreuzschlitzförmig ist.

## Claims

1. Airbag for an airbag module, having means for connecting the airbag to a gas generator, the airbag (6) having a slot-shaped opening (16) for the introduction of the gas generator (7), the said opening bringing about the formation of at least two zones (19) in the airbag (6), and passages (17), into which fastening means (8) protruding from the gas generator (7) can be threaded, being provided in the zones, and it being possible for the gas generator (7) to be introduced completely into the airbag (6) through the slot-shaped opening (16), **characterized in that** fastening means (8) protruding from the gas generator (7) which has been introduced can be threaded into the passages (17) in such a manner that the zones (19) partially overlap.

2. Airbag according to Claim 1, **characterized in that** the overlapping causes the zones (19) in the airbag (6) to open up an aperture (18) for a connection (21) of an ignitor cable (12).

3. Airbag according to Claim 1 or 2, **characterized in that** the slot-shaped opening (16) forms an even number of zones (19).

4. Airbag according to one of the preceding claims, **characterized in that** the passages (17) are punched holes.

5. Airbag according to one of the preceding claims, **characterized in that** the passages (17) have a reinforced edge.

6. Airbag according to one of the preceding claims, **characterized in that** two fastening means (8) are provided and the opening (16) is in the shape of a cross recess.

## Revendications

1. Coussin à gaz pour un module d'airbag, comportant des moyens de liaison du coussin à gaz à un générateur de gaz, le coussin à gaz (6) présentant une ouverture (16) en forme de fente pour introduire le générateur de gaz (7), par laquelle sont formés au moins deux champs (19) dans le coussin à gaz (6), et dans les champs (19) étant prévus des passages (17) dans lesquels peuvent être enfilés des moyens de fixation (8) faisant saillie hors du générateur de gaz (7), et le générateur de gaz (7) pouvant être introduit entièrement dans le coussin à gaz (6) à travers l'ouverture (16) en forme de fente, **caractérisé en ce que** les passages (17) peuvent être enfilés sur les moyens de fixation (8) faisant saillie hors du générateur de gaz (7) introduit de telle sorte que les champs (19) se chevauchent partiellement.

2. Coussin à gaz selon la revendication 1, **caractérisé en ce que** grâce au chevauchement, les champs (19) dans le coussin à gaz (6) dégagent un évidement (18) pour un raccord (21) d'un câble d'amorce (12).

3. Coussin à gaz selon l'une ou l'autre des revendications 1 et 2, **caractérisé en ce que** l'ouverture (16) en forme de fente forme un nombre pair de champs (19).

4. Coussin à gaz selon l'une des revendications précédentes, **caractérisé en ce que** les passages (17) sont des trous estampés.

5. Coussin à gaz selon l'une des revendications précédentes, **caractérisé en ce que** les passages (17) présentent un bord renforcé.

6. Coussin à gaz selon l'une des revendications précédentes, **caractérisé en ce qu'**il est prévu deux moyens de fixation (8) et **en ce que** l'ouverture (16) est en forme de fente cruciforme.
